# EUROPÄISCHE PATENTSCHRIFT

(11) **EP 0 639 045 B1**
(45) Veröffentlichungstag und Bekanntmachung des Hinweises auf die Patenterteilung: **23.04.1997**
(21) Anmeldenummer: 93916126.1
(22) Anmeldetag: 13.07.1993
(51) Int. Cl.: A01D 34/73, A01D 34/63, A01D 34/67, A01D 34/68

(54) **SCHNEIDWERK ZUM UMWELTFREUNDLICHEN SCHNEIDEN VON STENGEL ODER HALME VON PFLANZEN UND/ODER VON GRASÄHNLICHEN GEWÄCHSEN**
ENVIRONMENTALLY SAFE CUTTING MECHANISM FOR STALKS OR STEMS OF PLANTS AND/OR GRASS-LIKE VEGETATION
MECANISME NON-NUISIBLE A L'ENVIRONNEMENT POUR LA COUPE DE TIGES OU DE BRINS DE PLANTES ET/OU DE PLANTES SIMILAIRES A DE L'HERBE

(30) Priorität: 16.07.1992 HU 233192
(43) Veröffentlichungstag der Anmeldung: 22.02.1995
(73) Patentinhaber: SULLER, Attila, H-4032 Debrecen (HU); TOTH, Arpad, 4225 Debrecen (HU)
(72) Erfinder: SULLER, Attila, H-4032 Debrecen (HU); TOTH, Arpad, 4225 Debrecen (HU)
(74) Vertreter: Finck, Dieter, Dr.Ing.
(86) Internationale Anmeldenummer: HU9300044
(87) Internationale Veröffentlichungsnummer: WO9401994

(56) Entgegenhaltungen:
- AT-B- 270 284
- CH-A- 492 387
- DD-A- 286 501
- FR-A- 1 094 356
- GB-A- 1 119 648
- GB-A- 1 591 489
- US-A- 2 504 268
- US-A- 2 585 405

## Beschreibung

Die Erfindung betrifft ein Schneidwerk zum umweltfreundlichen Schneiden von Stengeln oder Halmen von Pflanzen und/oder grasähnlichen Gewächsen, mit wenigstens einer Schnitteinheit, die auf einer Kreisbahn im Abstand zueinander angebrachte Gegenschneiden und oberhalb der Gegenschneiden angeordnete Rotationsmesser aufweist, wobei das Verhältnis zwischen der am Schnittprozeß tatsächlich teilnehmenden Schneidfläche einer Gegenschneide und der am Schnittprozeß tatsächlich teilnehmenden Fläche des Zwischenraums zwischen zwei benachbarten Gegenschneiden kleiner als eins ist.

Auf dem Gebiet des Schneidens mit Gegenschneide sind zahlreiche Schneidwerke bekannt. Bei den meisten besteht eine reibungsbehaftete Verbindung zwischen den Rotationsmessern und den Gegenschneiden.

Aufgrund der Reibung ist der Energiebedarf der bekannten Schneidwerke jedoch sehr hoch. Darüber hinaus sind die Funktionsteile einem erhöhten Verschleiß ausgesetzt.

Außerdem ist durch die reibungsbehaftete Verbindung zwischen den Rotationsmessern und den Gegenschneiden nur eine begrenzte Drehzahl der Rotationsscheiben möglich, an denen die Messer angebracht sind. Die Rotationsmesser können nur mit einer Umlaufgeschwindigkeit von 3-6 m/s betrieben werden. Daraus folgt, daß die Ableitung, Trennung und Sammlung von Pflanzenteilen und das gleichzeitige Schneiden nur mit einer niedrigen Arbeitsgeschwindigkeit durchgeführt werden können.

Nachteilig ist es bei diesen Schneidwerken auch noch, daß aufgrund des hohen Energiebedarfes weder Akkumulatoren noch Niederspannungs-Elektromotoren als Energiequelle für den Antrieb in Frage kommen.

Einen großen Anteil der Schneidwerke bilden die oszillierende Schneidwerke, wie sie beispielsweise aus dem USA-Patent Nr. 4 881 363 bekannt sind. Der Energiebedarf eines solchen Schneidwerks, der einerseits durch die Reibungsverluste und anderseits durch den Getriebeantrieb bestimmt wird, wird durch einen Verbrennungsmotor befriedigt. Ein solcher Verbrennungsmotor ist jedoch konstruktiv sehr aufwendig.

Das USA Patent Nr. 3 701 238 zeigt ein Grasschneidwerk, das sowohl Rotations- als auch oszillierende Systemmerkmale aufweist und dessen Energiequelle wegen seines erhöhten Energiebedarfes von einem Traktor gebildet wird.

Aus dem französischen Patent Nr. 1 094 336 ist es bekannt, daß Rotationsmesser und ihre Gegenschneiden Grashalme mit reibender Bewegung durch einen Schervorgang schneiden. Bei Anwendung dieser Lösung wird der sich aus der mechanischen Kraftübertragung ergebende Energiebedarf ebenfails durch Traktoren oder Verbrennungsmotoren gedeckt. Als Nachteil ist es auch zu bezeichnen, daß durch die dauerhafte Reibung, die Umlaufgeschwindigkeit der Messer nicht über 3-6 m/s gesteigert werden kann. Dadurch sind der Erhöhung der Arbeitsgeschwindigkeit erhebliche Grenzen gesetzt.

Bei dieser Art von Schneidwerksystemen ist außerdem das Problem des Transportes und der Weiterleitung der geschnittenen Pflanzenteile ungelöst. Dadurch häufen sich geschnittenen Pflanzenteile vor dem Schneidwerk an, die die Fortbewegung der des Schneidwerks behindern. Nachteilig wirken auch bei diesen Apparaten lange Finger, die auf der Rasenfläche liegende, heruntergefallene Baumblätter aufspießen, da die aufgespießten Blätter die Grashalme herunterdrücken, bevor das Schneidwerk sie erreicht. Dadurch kann die Verstopfung des Schneidwerks nicht verhindert werden. Das Schneidwerk ist sehr beschädigungsempfindlich, denn die Rotationsmesser werden wegen der niedrigen Umlaufgeschwindigkeit von 3-6 m/s starr angebracht und können deshalb bei einem Hindernis nicht ausweichen.

Bekannt ist auch das ungarische Patent Nr. 204 642 "Verfahren und Vorrichtung zum Schneiden von Stengeln oder Halmen von Pflanzen". Bei dieser Vorrichtung ist zwischen den Gegenschneiden und dem sich mit einer Umlaufgeschwindigkeit von 60-90 m/s drehenden Rotationsmesser ein Spalt von 3.5 mm vorgesehen. Mit Hilfe dieser Lösung läßt sich der zum Schneiden benötigte Energiebedarf im Verhältnis zu oszilierenden Schneidwerken niedrig halten, wobei eine für die Rotationsmäher charakteristische hohe Arbeitsgeschwindigkeit beibehalten werden kann. Die Beschädigungsempfindlichkeit des Schneidwerkes wird durch Schwenkbarkeit der rotierenden Messer wesentlich vermindert.

Als Nachteil dieser Lösung ist zu bezeichnen, daß ein feiner Schnitt der Grashalme nicht verwirklicht werden kann, da der Mäher die feinen Grashalme nicht wegschneidet, sondern aufgrund des festgelegten Spalts zwischen den Gegenschneiden und dem Rotationsmesser und der hohen Umlaufgeschwindigkeit der Messer zerreißt oder sie auf die Oberfläche der Gegenschneide legt. Das Zerreißen der Stengel oder Halme von Pflanzen verursacht grobe Wunden, die nur langsam überwachsen. Der Teil der Pflanzen, der im Boden bleibt, vertrocknet durch diese Wunde, d. h. er bleibt im Wachstum zurück. Dadurch verfärbt sich die Rasenfläche und ihr Zustand verschlechtert sich. Bei landwirtschaftiichen Pflanzenprodukten bringt die Verwundung einen erheblichen Produktionsausfall mit sich. Bei besonders groben Wunden besteht die Gefahr der Infektion, woraus folgt, daß der Gebrauch einer solchen Mähvorrichtung auch umweltschädlich sein kann.

Ein weiterer Nachteil der vorher erwähnten Ausführung ist die hohe Umlaufgeschwindigkeit der Messerscheibe (60-90 m/s), die die einen großen Lärm erzeugt, was wiederum in der Nähe von Wohnhäusern, Krankenhäusern oder Erholungsheimen außerordentlich störend und dadurch umweltschädlich sein kann.

Schließlich ist es auch nachteilig, daß dichte Rasenteppiche mit dieser Art von Rasenmähern nicht gemäht werden können, da die Oberfläche der Gegenschneiden zu groß ist, und die Zwischenräume benachbarter Gegenschneiden zu klein ist. Das Verhältnis zwischen den Gegenschneideflächen und den freien Zwischenraumflächen beträgt mindestens eins. Wegen der engen Zwischenräume können die Grashalme nicht voll in sie hineindringen, woraus foigt, daß die Gegenschneiden die Grashalme während der Fortbewegung herunterdrücken. Daraus folgt ein schlechtes Schnittbild, wodurch die äußere ästhetische Erscheinung der Rasenfläche nachträglich beeinflußt wird. Deswegen können in der Praxis mit einem solchen Rasenmäher nur geringe Arbeitsgeschwindigkeiten erreicht werden.

Aus der GB, A, 1 591 489 ist ein gattungsgemäßes Schneidwerk bekannt, bei dem der Abstand zwischen den Gegenschneiden und den Rotationsmessern 5 mm beträgt. Um bei diesem Abstand ein befriedigendes Schneidergebnis zu erhalten, ist eine Umlaufgeschwindigkeit der Rotationsmesser von ungefähr 80 m/s erforderlich. Hierbei werden die Grashalme wegen des Abstands von 5mm nicht direkt bei Auftreffen der Rotationsmesser geschnitten, sondern über die Schneidkanten der Gegenschneiden gezogen und zerrissen, so daß den Rotationsmessern ein erhöhter Widerstand entgegengesetzt wird. Aufgrund dieses erhöhten Widerstands und hohen Umlaufgeschwindigkeit ist jedoch der Energiebedarf des bekannten Schneidwerks sehr groß. Bei Verwendung eines von einem Akkumulator gespeisten Elektromotorantriebs für den Antrieb der Rotationsmesser ist daher die zum Schneiden zu Verfügung stehende Zeit sehr gering. Darüber hinaus erzeugt das bekannte Schneidwerk aufgrund der hohen Umlaufgeschwindigkeit viel Lärm.

Der Erfindung liegt deshalb die Aufgabe zugrunde, mit konstruktiv einfachen Mitteln ein Schneidwerk zu schaffen, mit dem sich bei geringem Energieaufwand ein ausgezeichnetes Schneidergebnis erreichen läßt.

Ausgehend von dem gattungsgemäßen Stand der Technik wird diese Aufgabe dadurch gelöst, daß der Abstand h zwischen den Gegenschneiden und den Rotationsmessern zwischen 0 < h ≤ 2 mm einstellbar ist und die Umlaufgeschwindigkeit der Rotationsmesser zwischen 10 bis 50 m/s einstellbar ist.

Durch den geringen Abstand zwischen den Gegenschneiden und den Rotationsmessern ist es möglich, Stengel oder Halme mit einer geringen Umlaufgeschwindigkeit der Rotationsmesser von 10 bis 50 m/s exakt zu schneiden. Dies liegt in erster Linie daran, daß die Stützwirkung der Gegenschneiden innerhalb dieses Abstandes so groß ist, daß die Stengel oder Halme bei der genannten Umlaufgeschwindigkeit kaum durchgebogen und über die Schneidkanten gezogen werden. Andererseits stehen die Rotationsmesser jedoch auch nicht mit den Gegenschneiden in Berührung, so daß keine großen Reibungsverluste vorhanden sind.

Mit dem erfindungsgemäßen Schneidwerkzeug lassen sich Halme und Stengel also mit sehr wenig Energieaufwand exakt schneiden. Dadurch ist es auch bei Verwendung von durch Akkumulatoren gespeisten Elektroantrieben möglich eine lange Schneidzeit zu erreichen. Darüber hinaus ist die Lärmerzeugung des erfindungsgemäßen Schneidwerks wegen der geringen Reibung der Funktionsteile und der niedrigen Umlaufgeschwindigkeit der Rotationsmesser klein.

Die Einstellbarkeit des Abstandes h und der Umlaufgeschwindigkeit der Rotationsmesser ermöglichtes, sowohl Pflanzen mit dickem als auch mit dünnem Halm exakt zu schneiden und grobe Verletzungen der Pflanzen zu vermeiden. Bei Pflanzen mit dünnem Halm wird ein minimaler Abstand, bei Pflanzen mit dickem Halm ein maximaler Abstand von 2mm eingestellt. Bei anderen Pflanzenarten liegt der Abstand zwischen den beiden Grenzwerten.

Durch die Veränderbarkeit der Umlaufgeschwindigkeit der Rotationsmesser zwischen 10-50 m/s können auch dicke, feine Grashalme und Teppichrasen gleichzeitig mit höheren Arbeitsgeschwindigkeit gemäht werden. Das Schneidwerk biegt das Gras während der Fortbewegung weder nach vorne, noch legt es es auf den Boden. So kann das Gras ohne Hindernis in die Zwischenräume der Gegenschneiden gelangen, wo es die Rotationsmesser während ihrer Kreisbewegung gegen die Gegenschneiden preßt und in exakt schneiden ohne es zu zerreißen.

Bei einer bevorzugten Ausführungsform ist der Durchmesser eines die freien Endpunkte der Gegenschneiden enthaltenden Kreises höchstens 20% größer als der Durchmesser der Kreisbahn der Rotationsmesser. Hierdurch wird ein Aufspießen von Laub oder ähnlichem verhindert und eine Verstopfung vermieden.

Die Gegenschneiden können auf einer Kreisbahn auf einem Gestell des Schneidwerks befestigt und die Rotationsmesser oberhalb der Gegenschneiden drehbar eingebettet sein.

Die Gegenschneiden können aber auch auf einer Kreisbahn unterhalb der Rotationsmesser drehbar gelagert sein, wodurch das Verhältnis zwischen der am Schnittprozeß tatsächlich teilnehmenden Fläche der Gegenschneiden und der freien Flächen der Zwischenräume durch einfache Verdrehung anderer Gegenschneiden mit anderer Schneidenteilung verändert werden kann.

Vorzugsweise sind mehrere auf einem Gestell des Schneidwerks angeordnete Schnitteinheiten vorgesehen.

Für jede Schnitteinheit kann ein eigener Antrieb vorgesehen ist, der mit einer äußeren Energiequelle verbunden ist. Es kann jedoch auch für alle Schnitteinheiten ein gemeinsamer Antrieb vorgesehen werden, der mit einer äußeren Energiequelle verbunden ist.

Als Energiequelle kann ein Akkumulator oder eine Sonnenzelle oder ein angeschlossener Hydromotor verwendet werden.

Ausführungsbeispiele der Erfindung werden nachstehend anhand von Zeichnungen näher erläutert: Es zeigen:
- Fig.1: eine Draufsicht der prinzipieilen Anordnung eines Schneidwerkes;
- Fig.2: einen Querschnitt durch die Schnitteinheit des in Fig.1 dargestellten Schneidwerkes;
- Fig.3: eine bevorzugte Ausführungsform einer Kreisbahn von Rotationsmessern in Draufsicht;
- Fig.4: eine andere bevorzugte Ausführungsform der Kreisbahn der Rotationsmesser in Draufsicht.
- Fig.5: ein teilweise geschnittene Ansicht eines Ausführungsbeispiels des Schneidwerkes;
- Fig.6: eine teilweise geschnittene Draufsicht auf das Schneidwerk von Fig.5.

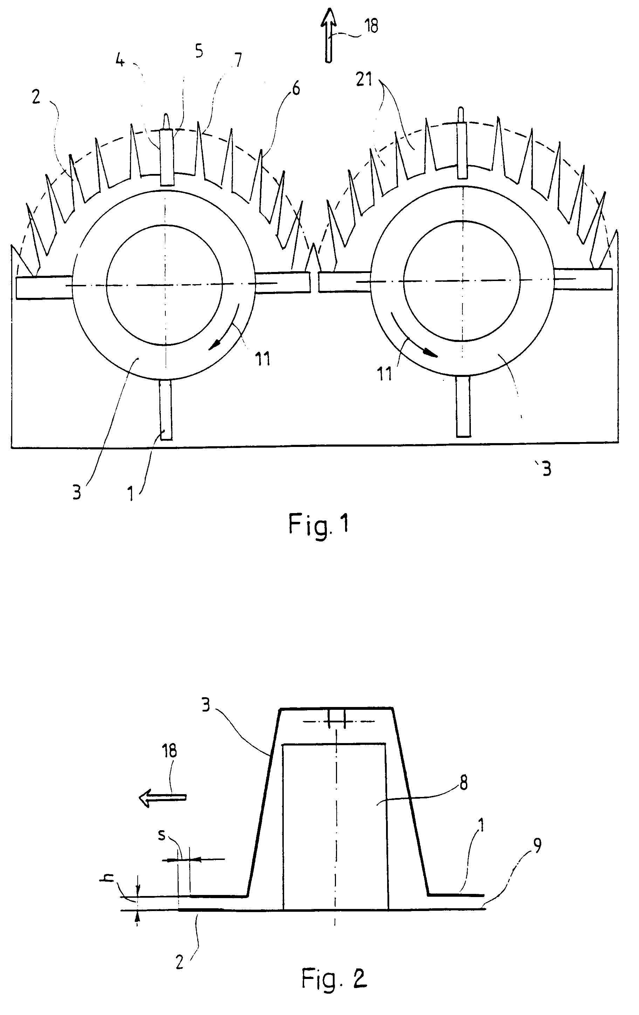

Das in den Fig. 1 und Fig.2 gezeigte Schneidwerk weist eine Schnitteinheit 10 auf, die aus einer Messergruppe besteht, die ein zum Schneiden von Stengeln oder Halmen von Pflanzen dienendes Rotationsmesser 1 und auf einer Kreisbahn, auf einem Gestell 9 angeordnete, finger- und spitzförmige Gegenschneiden 2 umfaßt. Nach dem Ausführungsbeispiel schließen die Rotationsmesser 1 einen Winkel von 90 Grad miteinander ein, also jede Schnitteinheit 10 enthält vier Rotationsmesser 1. Die Anzahl der Rotationsmesser 1 kann sich natürlich bei anderen Ausführungsformen beliebig ändern- Die Rotationsmesser 1 sind auf dem unteren Rand einer in vertikaler Richtung einstellbaren Grasleittrommel 3 oberhalb der Gegenschneiden 2 untergebracht.

Der Durchmesser des aus den freien Endpunkten der Gegenschneiden 2 bestehenden Kreises ist 20% größer als der Durchmesser der Kreisbahn der Rotationsmesser 1. Bei dem Ausführungsbeispiel ist der Durchmesser der Kreisbahn der Gegenschneiden 2 20 mm größer als der Durchmesser der Kreisbahn der Rotationsmesser. Der sich dadurch ergebende herausragende Teil "s" ist in Fig.2 gezeigt.

Zwischen den Rotationsmessern 1 und den darunter liegenden Gegenschneiden 2 besteht ein ein Abstand "h". Es gibt zwischen ihnen also keine Reibung. Das Maß des Abstandes "h" läßt sich leicht durch Höhenverstellung der die Rotationsmesser 1 enthaltenden Grasleittrommel 3 den Eigenschaften des Grasbestandes (Halmdicke, Dichtheit des Rasens) entsprechend einstellen. Der optimale Wert von "h" liegt zwischen 0-2 mm.

Das Verhältnis zwischen den Gegenschneideflächen und Zwischenraumflächen 21 beträgt bei der gezeigetn Ausführungsform 0.8, das heißt es ist kleiner als eins.

Die Rotationsmesser 1 sind auf einer Seite mit Schneidekanten 4 und auf der anderen Seite mit Schneidekanten 5 versehen, die eine Seite 6 und die andere Seite 7 der Gegenschneiden 2 sind bei der gezeigten Ausführungsform ebenfalls mit Schneidekanten versehen, sie können jedoch auch stumpf ausgebildet sein.

Die Gegenschneiden 2 sind bei der Ausführungsform in Pfeilrichtung 18 auf einem Halbkreis angeordnet. Obwohl es nicht dargestellt ist, können die Gegenschneiden 2 auch auf einer drehbar eingebetteten Scheibe auf dem Gestell 9 angeordnet sein.

Die die Rotationsmesser 1 enthaltende Grasleittrommel 3 ist auf einer an dem Gestell 9 des Schneidwerkes drehbar eingebetteten Antriebswelle vertikal einstellbar angeordnet. Der Antrieb 8 ist in diesem Fall ein 24V Gleichstrommotor mit einer Leistung von etwa 200W.

Das gezeigte Schneidwerk besteht aus zwei nebeneinander angeordneten Schnitteinheiten, das heißt, es besteht aus zwei Gegenschneiden 2 enthaltenden Gruppen, die auf zwei nebeneinander liegenden Kreisbahnen angeordnet sind, und aus zwei darüber in einer Abstand "h" angeordneten Rotationsmesser-Gruppen, die ebenfalls auf zwei nebeneinander liegenden Kreisbahnen angeordnet sind. Die Rotationsmesser 1 bewegen sich auf Kreisbahnen, und zwar in entgegengesetzter Richtung, in Richtung der Pfeile 11 (Fig. 1 ).

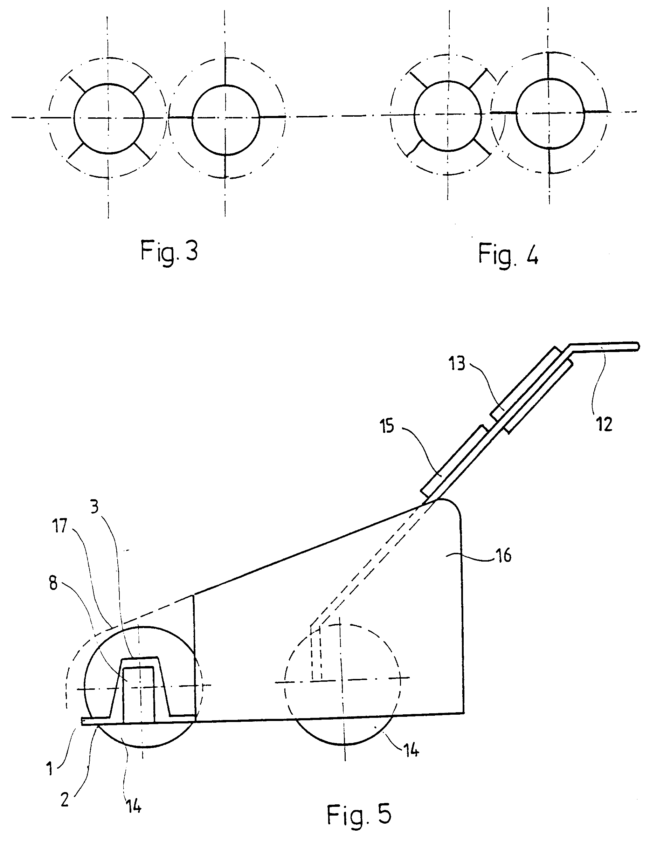

Fig.3 zeigt ein Ausführungsbeispiel mit zwei Schnitteinheiten 10, die in einem Schneidwerk vereint sind, wobei die Rotationsmesser 1 auf zwei nebeneinander liegenden Kreisbahnen angeordnet sind, und nicht in Überdeckung liegen. In diesem Fall ist eine Syncronisation der Drehzahlen der Schnitteinheiten 10 nicht erforderlich.

Bei der Ausführungsform von Fig. 4 haben die zwei Schnitteinheiten 10 zwei nebeneinander liegende Kreisbahnen der Rotationsmesser 1, die sich einander überdecken, woraus eindeutig folgt, daß die Drehzahlen beider Schnitteinheiten zu syncronisieren sind.

Vor der Inbetriebnahme wird zuerst ein schon im voraus bestimmter Abstand (der im Ausführungsbeispiel 1 mm ist) "h" zwischen den Rotationsmessern 1 und den Gegenschneiden 2 genau eingestellt, dann wird der Antrieb 8 in Gang gesetzt.

Während der Fortbewegung des Schneidwerkes in Richtung des Pfeiles 18 werden die zwischen die Gegenschneiden 2 gelangenden Pflanzenhalme durch die in Pfeilrichtung 11 drehenden, an der Grasleittrommel befestigten Schnittkanten 4 und 5 der Rotationsmesser 1 mit Scherbewegung zerschnitten. Dann werden die geschnittenen Pflanzenteile mit Hilfe der sich gegeneinander drehenden Grasleittrommel 3 zur Mitte des Schneidwerkes und von dort nach hinten transportiert.

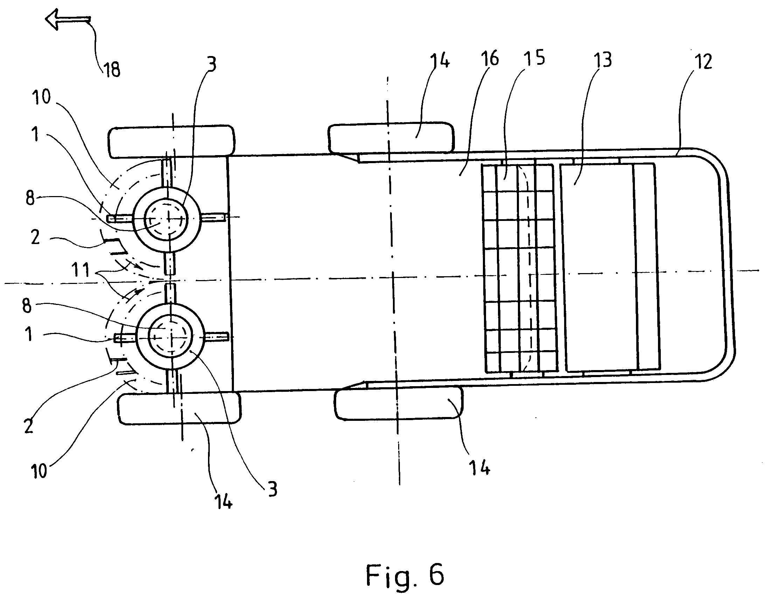

Bei der in Fig.5 und Fig.6 gezeigten Ausführungsform hat das Schneidwerk ebenfalls zwei Schnitteinheiten 10. Beide Schnitteinheiten 10 werden Jeweils durch einen Antrieb 8 in Form eines Elektromotors in entgegengesetzte Drehrichtung (Pfeil 11) angetrieben. Wegen dem Abstand "h", der maximal 2 mm betragen kann, tritt zwischen den Rotationsmessern 1 und den Gegenschneiden 2 keine Reibung auf.

Bei der Ausführungsform von Fig.5 und Fig.6 erfolgt die Energieversorgung des auf dem Gestell 9 durch die konische Grasleittrommel 3 verdeckten Antriebs 8 in Form von Elektromotoren durch einen ebenfalls am Gestell 9 befestigten, am Handgriff angeordneten Akkumulator 13, der als Energiequelle dient. Zur Nachladung des Akkumulators dient ein Ladegerät oder eine eingebaute Solarzelle 15. Unter der Solarzelle 15 befindet sich ein Grasfangkorb 16, der zum Auffangen und Sammeln abgeschnittener Pflanzenteile dient. Das Schneidwerk verfügt außerdem über eine Haube 17.

Vor Inbetriebnahme wird der Akkumulator 13 mittels eines Ladegeräts oder der Solarzelle 15 aufgeladen, die Schnitthöhe durch die in ihre Höhe verstellbaren Räder 14 eingestellt und der Antrieb 8 eingeschaltet.

Das weitere Vorgehen ist wie beim vorhergehenden Beispiel. Die abgeschnittenen Pflanzenteile werden durch die Grasleittrommel 3 nach hinten in den Grasfangkorb 16 geworfen.

Ein großer Vorteil der Erfindung ist, daß zwischen dem Rotationsmesser 1 und den Gegenschneiden 2 ein vorher eingestellter Abstand "h" von 0-2 mm existiert, wodurch keine Reibverluste auftreten und die Rotationsmesser 1 gleichzeitig auch bei niedrigeren Umlaufgeschwindigkeiten ein perfektes Schneiden mit minimalem Energiebedarf gewährleisten.

Feine Gräschen werden nicht zerrissen, sondern mit exaktem Schnitt geschnitten. Die Wunden der im Boden zurückgebliebenen Teile der Pflanzen heilen schnell, die Pflanzen trocknen nicht aus und verderben nicht. Dadurch wachsen die Stoppel wieder rascher.

Da die Rotationsmesser 1 direkt durch den Antrieb 8 angetrieben werden, sind die bei den herkömmlichen Rotationsschneidwerken verwendeten komplizierten Kraftübertragungssysteme mit großem Energiebedarf überflüssig.

Durch experimentelle Untersuchungen wurde nachgewiesen, daß nur ein Bruchteil des Energiebedarfes der herkömmlichen Schneidwerke für den Betrieb des erfindungsgemäßen Schneiderks ausreicht. Der Energiebedarf, eines erfindungsgemäßen Schneidwerkes beträgt bei einer Arbeitsbreite von 40 cm und einer Arbeitsgeschwindigkeit von 3-4 km/h in der Praxis nur etwa 120 W. Dies macht die Verwendung von Akkumulatoren oder aber auch einmal verwendbaren Batterien als Energiequelle möglich.

## Patentansprüche

1. Schneidwerk zum umweltfreundlichen Schneiden von Stengeln oder Halmen von Pflanzen und/oder grasähnlichen Gewächsen, mit wenigstens einer Schnitteinheit (10), die auf einer Kreisbahn im Abstand zueinander angebrachte Gegenschneiden (2) und oberhalb der Gegenschneiden (2) angeordnete Rotationsmessern (1) aufweist, wobei das Verhältnis zwischen der am Schnittprozeß tatsächlich teilnehmenden Schneidfläche einer Gegenschneide (2) und der am Schnittprozeß tatsächlich teilnehmenden Fläche des Zwischenraums (21) zwischen zwei benachbarten Gegenschneiden (2) kleiner als eins ist,
dadurch gekennzeichnet, daß der Abstand h zwischen den Gegenschneiden (2) und den Rotationsmessern (1) zwischen 0 < h ≤ 2 mm einstellbar ist und die Umlaufgeschwindigkeit der Rotationsmesser zwischen 10 bis 50 m/s einstellbar ist.

2. Schneidwerk nach Anspruch 1, dadurch gekennzeichnet, daß der Durchmesser eines die freien Endpunkte der Gegenschneiden (2) enthaltenden Kreises höchstens 20% größer ist als der Durchmesser der Kreisbahn der Rotationsmesser (1).

3. Schneidwerk nach einem der vorhergehenden Ansprüche, dadurch gekennzeichnet, daß die Gegenschneiden (2) auf einer Kreisbahn auf einem Gestell (9) des Schneidwerks befestigt sind und die Rotationsmesser (1) oberhalb der Gegenschneiden (2) drehbar gelagert sind.

4. Schneidwerk nach Anspruch 1 oder 2, dadurch gekennzeichnet, daß die Gegenschneiden (2) auf einer Kreisbahn unterhalb der Rotationsmesser (1) drehbar eingebettet sind.

5. Schneidwerk nach einem der vorhergehenden Ansprüche, gekennzeichnet durch mehrere auf einem Gestell (9) des Schneidwerks angeordnete Schnitteinheiten (10).

6. Schneidwerk nach Anspruch 5, dadurch gekennzeichnet, daß für jede Schnitteinheit (10) ein eigener Antrieb (8) vorgesehen ist, der mit einer äußeren Energiequelle (13) verbunden ist.

7. Schneidwerk nach Anspruch 5, dadurch gekennzeichnet, daß für alle Schnitteinheiten (10) ein gemeinsamer Antrieb (8) vorgesehen ist, der mit einer äußeren Energiequelle (13) verbunden ist.

## Claims

1. Cutting apparatus for the environment-friendly cutting of stems or stalks of plants and/or grass-like plants, with at least one cutting unit (10) which comprises counter-cutters (2) mounted at intervals on a circular path and rotary blades (1) disposed above the counter-cutters (2), in which the ratio between the cutting surface area of a counter cutter (2) actually taking part in the cutting process and the area of the intermediate space (21) between two adjacent counter cutters (2) actually taking part in the cutting process is smaller than one,
characterized in that the distance h between the counter cutters (2) and the rotary blades (1) is adjustable between 0 < h ≤ 2 mm and the speed of rotation of the rotary blades is adjustable between 10 and 50 m/s.

2. Cutting apparatus according to Claim 1, characterized in that the diameter of a circle containing the free end points of the counter cutters (2) is at most 20% greater than the diameter of the circular path of the rotary blades (1).

3. Cutting apparatus according to either of the preceding claims, characterized in that the counter-cutters (2) are fixed on a circular path on a mounting (9) of the cutting apparatus and the rotary blades (1) are mounted rotatably above the counter-cutters (2).

4. Cutting apparatus according to Claim 1 or Claim 2, characterized in that the counter-cutters (2) are let in rotatably on a circular path below the rotary blades (1).

5. Cutting apparatus according to any one of the preceding claims, characterized by a plurality of cutting units (10) disposed on a mounting (9) of the cutting apparatus.

6. Cutting apparatus according to Claim 5, characterized in that a separate drive (8) connected to an outside energy source (13) is provided for each cutting unit (10).

7. Cutting apparatus according to Claim 5, characterized in that a common drive (8) connected to an outside energy source (13) is provided for all of the cutting units (10).

## Revendications

1. Mécanisme non-nuisible à l'environnement pour la coupe de tiges ou de brins de plantes et/ou de plantes similaires à de l'herbe, comprenant au moins une unité de coupe (10) qui présente des contre-lames (2) montées de manière espacée les unes des autres sur une trajectoire circulaire, et des couteaux rotatifs (1) montés au-dessus des contre-lames (2), le rapport entre la surface de coupe d'une contre-lame (2) participant réellement au processus de coupe et la surface de l'intervalle (21) compris entre deux contre-lames (2) voisines et participant réellement au processus de coupe est inférieur à un, caractérisé en ce que l'écart h séparant les contre-lames (2) et les couteaux rotatifs (1) peut être ajusté entre 0 < h ≤ 2 mm, et en ce que la vitesse de rotation des couteaux rotatifs peut être réglée entre 10 et 50 m/sec.

2. Mécanisme de coupe selon la revendication 1, caractérisé en ce que le diamètre d'un cercle comprenant les points d'extrémité libres des contre-lames (2) est tout au plus de 20 % plus grand que le diamètre de la trajectoire circulaire des couteaux rotatifs (1).

3. Mécanisme de coupe selon l'une quelconque des revendications précédentes, caractérisé en ce que les contre-lames (2) sont fixées sur une trajectoire circulaire sur un bâti-support (9) du mécanisme de coupe, et en ce que les couteaux rotatifs (1) sont montés de manière à pouvoir tourner au-dessus des contre-lames (2).

4. Mécanisme de coupe selon la revendication 1 ou 2, caractérisé en ce que les contre-lames (2) sont encastrées de manière à pouvoir tourner sur une trajectoire circulaire en-dessous des couteaux rotatifs (1).

5. Mécanisme de coupe selon l'une quelconque des revendications précédentes, caractérisé par une pluralité d'unités de coupe (10) agencées sur un bâti-support (9) du mécanisme de coupe.

6. Mécanisme de coupe selon la revendication 5, caractérisé en ce qu'on prévoit, pour chaque unité de coupe (10), un dispositif d'entraînement (8) propre qui est raccordé à une source d'énergie extérieure (13).

7. Mécanisme de coupe selon la revendication 5, caractérisé en ce qu'on prévoit, pour toutes les unités de coupe (10), un dispositif d'entraînement (8) commun qui est raccordé à une source d'énergie extérieure (13).
